# EUROPÄISCHE PATENTANMELDUNG

(11) **EP 1 246 391 A1**
(43) Veröffentlichungstag der Anmeldung: **02.10.2002**
(21) Anmeldenummer: 02100266.2
(22) Anmeldetag: 15.03.2002
(51) Int. Cl.: H04L 9/08

(54) **Verfahren und System zur kryptographischen Datenkommunikation mit mehreren Instanzen**

(30) Priorität: 29.03.2001 DE 10115600
(71) Anmelder: SIEMENS AKTIENGESELLSCHAFT, 80333 München (DE)
(72) Erfinder: Fries, Steffen, 81677 München (DE); Klasen, Wolfgang, Dr., 85521 Ottobrunn (DE); Volkmann, Gerald, 81825 München (DE)

(57) **Zusammenfassung**

Es wird ein Verfahren zur Datenkommunikation in einem kryptographischen System mit mehreren Instanzen angegeben, bei dem die Instanzen in einer hierarchischen Struktur angeordnet sind. Bei einer Veränderung einer aktuellen Instanz der Struktur wird die Veränderung denjenigen Instanzen mitgeteilt, die direkt mit der hierarchisch übergeordneten Instanz der aktuellen Instanz verbunden sind.

## Beschreibung

Die Erfindung betrifft ein Verfahren und eine Anordnung zur Datenkommunikation in einem kryptographischen System mit mehreren Instanzen.

Allgemein bekannt sind Methoden zur Schlüsselverteilung und Schlüsselvereinbarung (siehe [1]).
Dabei besteht insbesondere das Problem, dass Schlüssel über einen (unsicheren) Kommunikationsweg verteilt, ausgetauscht oder vereinbart werden sollen. Um dies zu ermöglichen, sind insbesondere folgende Anforderungen von Bedeutung:
1. Vertraulichkeit:
   Es muss gewährleistet sein, dass der ausgetauschte Schlüssel nur den befugte Teilnehmern bzw. Prozessen zugänglich ist. Geheime Schlüssel müssen während ihrer Generierung, Verteilung, Speicherung und - nach Möglichkeit - sogar während der Ausführung geheim gehalten werden.
2. Erkennung der Datenunversehrtheit:
   Es müssen Maßnahmen ergriffen werden, damit die ausgetauschten Schlüssel den befugten Teilnehmern unverändert und fehlerfrei zur Verfügung stehen. Wenn ein Übertragungskanal stark gestört ist, sind gegebenenfalls fehlerkorrigierende Verfahren notwendig.
3. Erkennung von Wiederholungen und Verzögerungen:
   Eine Gefahr besteht darin, dass bereits benutzte Schlüssel ein zweites Mal verwendet werden, weil dann gegebenenfalls auch die nachfolgende Kommunikation nicht von einer früheren unterschieden werden kann. Diese Gefahr besteht insbesondere dann, wenn ein Schlüsselaustauschprotokoll abgehört worden ist. Demgemäß sind insbesondere Verzögerungen während der Schlüsselverteilung als verdächtig einzustufen.
4. Authentikation des Ursprungs des Schlüssels oder Teilschlüssels:
   Eine Schlüsselabsprache ohne Authentikation ist gegebenenfalls sinnlos, weil diese eventuell mit einen potentiellen Angreifer erfolgen kann. Dies wird dadurch verhindert, dass anschließend eine zusätzliche Authentikation mit Hilfe von Schlüsseln durchgeführt wird, die bereits vorher sicher ausgetauscht oder vereinbart wurden.
5. Empfangsbestätigung und Verifikation des abgesprochenen Schlüssels:
   Die Empfangsbestätigung soll dem Absender nachweisen, dass der rechtmäßige Empfänger den Schlüssel korrekt erhalten hat. Da häufig nicht die ausgetauschten Schlüssel direkt verwendet werden, sondern als Teilschlüssel, Referenzen etc. dienen, müssen dynamisch abgesprochene Schlüssel vor ihrer Anwendung getestet werden. Diese Verifikation kann explizit durch gegenseitige Transformation vorgegebener Daten oder implizit durch Redundanz erfolgen, die den Protokollelementen des Austauschprotokolls hinzugefügt wird.

Diese nicht abschließende Aufzählung von Anforderungen führt dazu, dass, wenn diese eingehalten werden, eine mit hoher Sicherheit umzusetzende Schlüsselverteilung erfolgen kann.

Insbesondere ist es eine Eigenart heutiger elektronischer Systeme, dass diese verteilt ausgeführt sind. Infolge dessen sind eine Mehrzahl von Rechnern (auch: Instanzen, Prozesse, Prozessoren, Knoten, Teilnehmer) in einem Netzwerkverbund zusammengeschlossen, wobei die Rechner untereinander kommunizieren können. Im Rahmen der Schlüsselverteilung ist es ferner bekannt, einer hierarchische Struktur unter den Teilnehmern des Netzwerkverbundes vorzusehen. Insbesondere verbreitet ist hierbei eine Baumstruktur, die einen Wurzelknoten, Äste und Knoten umfasst, wobei die Knoten, die selbst keine darunter liegenden Knoten aufweisen, als Blätter der Baumstruktur bezeichnet werden.

Wendet man ein Verfahren zur Schlüsselverteilung auf eine hierarchische Struktur von Knoten, insbesondere eine Baumstruktur, an, so muss bei Veränderung eines Knotens für das gesamte System, das heißt den gesamten Baum, mindestens ein neuer Schlüssel ausgehandelt werden und an alle Knoten des Baumes kommuniziert werden. Hierbei ist es insbesondere von Nachteil, dass jeder Knoten einen neuen Schlüssel erhält und dass zwischen jeweils zwei Knoten stets derselbe Schlüssel eingesetzt wird. Selbst wenn zwischen jeweils zwei Knoten nur ein bestimmter Schlüssel (bzw. ein symmetrisches Schlüsselpaar) eingesetzt wird, ist es von Nachteil, dass empfangene Daten für jeden Schlüssel bzw. Empfänger getrennt umgeschlüsselt werden müssen.

Die **Aufgabe** besteht darin, ein effizientes und wirtschaftliches Verfahren zur Schlüsselverteilung vorzustellen, das die oben beschriebenen Nachteile vermeidet.

Zur Lösung der Aufgabe wird ein Verfahren zur Datenkommunikation in einem kryptographischen System mit mehreren Instanzen angegeben, bei dem die Instanzen in einer hierarchischen Struktur angeordnet sind. Bei einer Veränderung einer aktuellen Instanz der Struktur wird die Veränderung denjenigen Instanzen mitgeteilt, die direkt mit der hierarchisch übergeordneten Instanz der aktuellen Instanz verbunden sind.

Somit ist vorteilhaft sichergestellt, dass ein Instanzenverbund gebildet wird, der einen Teil der hierarchischen Struktur umfasst und für diesen Teil die Schlüsselverteilung gesondert ermöglicht.

Eine Weiterbildung besteht darin, dass die Datenkommunikation ein Verfahren zur Schlüsselverteilung umfasst.

Eine andere Weiterbildung besteht darin, dass die mehreren Instanzen Knoten oder Teilnehmer der Datenkommunikation darstellen.

Auch ist es eine Weiterbildung, dass die mehreren Instanzen in einem Netzwerkverbund zusammengeschlossen sind.

Eine andere Weiterbildung besteht darin, dass die hierarchische Struktur eine Baumstruktur ist.

Insbesondere ist es eine Weiterbildung, dass die Veränderung der aktuellen Instanz eine der folgenden Möglichkeiten umfasst:
a) ein Hinzufügen der aktuellen Instanz;
b) ein Entfernen der aktuellen Instanz;
c) ein Verändern mindestens einer Eigenschaft der aktuellen Instanz.

Eine andere Weiterbildung ist es, dass die Mitteilung der Veränderung darin besteht, dass ein modifizierter kryptographischer Schlüssel übermittelt wird. Auch ist es eine Weiterbildung, dass das Verfahren zur Durchführung von Multicast-Diensten einsetzbar ist. Dies bedeutet, dass ein Sender an mehrere Empfänger gleichzeitig auf dieselbe Art verschlüsselte Daten übermittelt, wobei jeder Empfänger die Entschlüsselung anhand der Schlüsselinformation, die den Sender zugeordnet ist, vornehmen kann.

Ferner wird zur Lösung der Aufgabe eine Anordnung zur Datenkommunikation in einem kryptographischen System mit mehreren Instanzen angegeben, bei der eine Prozessoreinheit vorgesehen ist, die derart eingerichtet ist, dass
a) die Instanzen in einer hierarchischen Struktur angeordnet sind;
b) bei einer Veränderung einer aktuellen Instanz der Struktur denjenigen Instanzen, die direkt mit der hierarchisch übergeordneten Instanz der aktuellen Instanz verbunden sind, die Veränderung mitteilbar ist.

Die erfindungsgemäße Anordnung eignet sich insbesondere zur Durchführung des erfindungsgemäßen Verfahrens oder einer seiner vorstehend erläuterten Weiterbildungen.

Weiterbildungen der Erfindungen ergeben sich auch aus den abhängigen Ansprüchen.

Anhand der folgenden Figuren werden Ausführungsbeispiele der Erfindung dargestellt und erläutert.

Es zeigen
- Fig.1: eine Skizze mit einer hierarchischen Struktur aus mehreren Knoten;
- Fig.2: eine Skizze mit einer hierarchischen Baumstruktur und Gruppenschlüsseln;
- Fig.3: eine Skizze zur Veranschaulichung eines Hinzufügens eines weiteren Knotens;
- Fig.4: eine Skizze einer hierarchischen Struktur mit Schritten eines Verfahrens zur Datenverteilung;
- Fig.5: eine Prozessoreinheit.

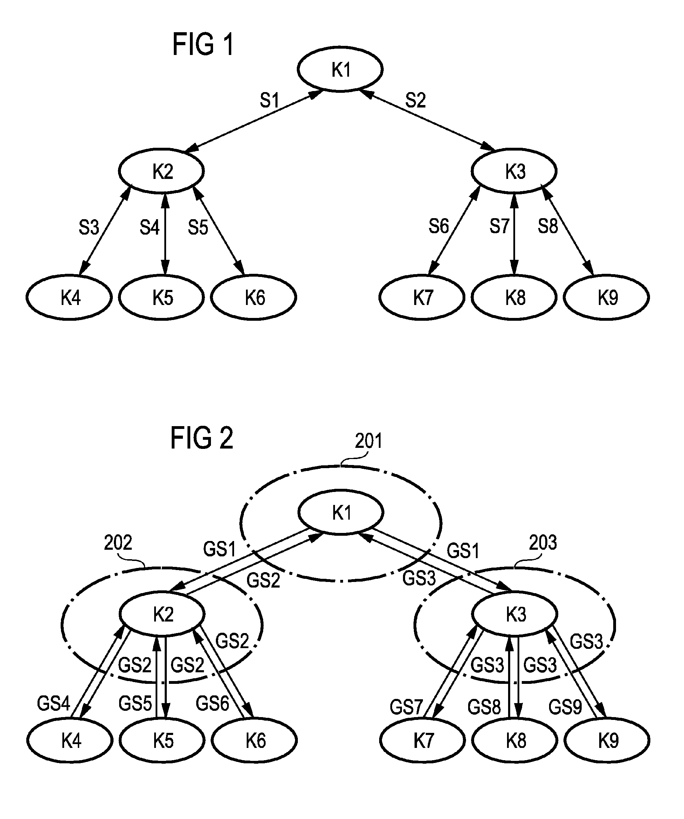

**Fig.1** zeigt eine Skizze mit einer hierarchischen Struktur aus mehreren Knoten. Dabei ist beispielhaft ein Wurzelknoten K1 gezeigt, der über eine Kante mit einem Knoten K2 und über eine Kante mit einem Knoten K3 verbunden ist. Der Knoten K2 ist wiederum verbunden mit hierarchisch untergeordneten Knoten K4, K5 und K6 (jeweils über eine Kante). Analog ist der Knoten K3 mit Knoten K7, K8 und K9 über jeweils eine Kante verbunden. Zwischen den Knoten K1 und dem Knoten K2 existiert ein symmetrischer Schlüssel S1 zur Datenverschlüsselung. Analog gibt es zwischen den Knoten K1 und K3 einen Schlüssel S2, zwischen den Knoten K3 und K7 einen Schlüssel S6, zwischen den Knoten K3 und K8 einen Schlüssel S7 und zwischen den Knoten K3 und K9 einen Schlüssel S8. Ferner gibt es zwischen den Knoten K2 und K4 einen Schlüssel S3, zwischen den Knoten K2 und K5 einen Schlüssel S4 und zwischen den Knoten K2 und K6 einen Schlüssel S5.

Die symmetrischen Schlüssel S1 bis S8 können insbesondere auch als ein symmetrisches Schlüsselpaar für die Datenverschlüsselung zwischen jeweils zwei Knoten ausgeführt sein. Durch das Schlüsselpaar ist gewährleistet, dass ein asymmetrisches Verschlüsselungsverfahren zwischen je zwei Knoten durchgeführt werden kann.

In der Ausführungsform von Fig.1 ist es insbesondere von Nachteil, dass eine Nachricht, die zu einem weiteren Knoten, als den direkt benachbarten Knoten eines aktuellen Knotens übermittelt werden soll, mehrfach umgeschlüsselt werden muss. Insofern ist ein sogenannter Multicast-Datentransfer, das heißt eine Mitteilung an mehrere Knoten ohne gesondertes jeweiliges Verschlüsseln, nicht möglich.

**Fig.2** zeigt eine Skizze mit einer hierarchischen Baumstruktur und Gruppenschlüsseln, wobei diese Struktur insbesondere einen Multicast-Datentransfer unterstützt.

Die Knoten K1 bis K9 sind entsprechend Fig.1 angeordnet. Jeder Knoten ist hierbei ein möglicher Initiator zur Schlüsselverteilung. Die Schlüsselverteilung kann eingeleitet werden, wenn sich bestimmte Daten innerhalb der Baumstruktur, sei es für die Knoten oder die Struktur, ändern oder wenn eine zeitlich vorbestimmte Erneuerung der Schlüssel durchgeführt werden soll. Insbesondere kann bei Hinzufügen oder Entfernen eines Kontens eine Änderung der Baumstruktur derart erfolgen, dass dadurch eine neue Schlüsselverteilung ansteht.

Jeder Knoten handelt mit dem Knoten, mit dem er direkt verbunden ist, ein Verfahren zur Schlüsselverteilung aus. Initiator ist insbesondere derjenige Knoten, zu dem sich mehrere Knoten verbunden haben. Für das Verfahren zur Schlüsselverteilung handelt jeder Initiatorknoten mit den direkt verbundenen Knoten einen (gemeinsamen) Gruppenschlüssel aus, der zum Schutz der Daten, insbesondere deren Integrität bzw. Vertraulichkeit, verwendet wird.

Ein Vorteil besteht darin, dass jeder Knoten die empfangenen Daten nach dem Entschlüsseln - vor dem Weiterleiten - nur einmal neu verschlüsseln muss. Für den oben erwähnten Multicast-Datentransfer ist es somit möglich, dass jeder Knoten die Daten nur einmal bearbeitet und an eine Vielzahl von Adressaten weiterleitet. Ein weiterer Vorteil besteht darin, dass ein Angriff, der im Vorspielen einer falschen Identität eines Knotens besteht (Maskerade), nicht möglich ist, da jeder Knoten einen eigenen Schlüssel zur Verschlüsselung besitzt. In Fig.2 gibt es für den Knoten K1 einen Gruppenschlüssel GS1, für den Knoten K2 einen Gruppenschlüssel GS2 und für den Knoten K3 einen Gruppenschlüssel GS3. Für die untergeordneten Knoten K4 bis K9 gibt es jeweils einen Gruppenschlüssel GS4 bis GS9. Der oben genannte Multicast-Datentransfer ist beispielsweise so vorgesehen, dass der Knoten K3 Daten erhält und diese an alle mit ihm verbundenen Knoten K1, K7, K8 und K9 auf einmal weiter übermitteln kann, wobei er die erhaltenen Daten nur einmal umschlüsseln muss. Erhält zum Beispiel der Knoten K3 von den Knoten K1 Daten, so sind diese mit dem Gruppenschlüssel GS1 verschlüsselt, der Knoten K3 setzt die Daten um, das heißt entschlüsselt die Daten und verschlüsselt sie neu mit dem Gruppenschlüssel GS3. Er überträgt daraufhin die neu verschlüsselten Daten an die Knoten K7 bis K9.

Kommt nun ein neuer Knoten hinzu, so muss nur für einen Teilbaum, das heißt für eine Gruppe (siehe Gruppen 201, 202 oder 203 in Fig.2 bis 4) der Gruppenschlüssel neu ausgehandelt werden, da sich der Teilbaum für die Gruppe ändert. Damit ist vorteilhafterweise nicht jeder Knoten der gesamten hierarchischen Struktur, hier des gesamten Baumes, betroffen, sondern nur diejenigen Knoten einer Gruppe, in welcher Gruppe die Änderung vorgenommen wird. Eine solche Änderung kann beispielsweise das Hinzufügen eines neuen Knotens, das Entfernen eines bereits vorhandenen Knotens, oder das Ändern bestimmter Parameter eines Knotens (oder mehrerer Knoten) umfassen.

Die Vorteile der genannten Lösung bestehen insbesondere darin, dass der Knoten die Daten nur einmal umschlüsseln muss, Multicast-Datentransfer kann auch über geschützte Datenverbindungen gewährleistet werden. Neue Schlüssel werden bei Veränderung eines Knotens (Hinzufügen, Entfernen, Ändern) nur für einen Teil der gesamten hierarchischen Struktur neu ausgehandelt. Ferner wird das Verfahren zur Schlüsselverteilung (Schlüsselmanagement) ökonomisch auf mehrere Knoten verteilt. Schließlich sind interne Angriffe, d.h. Angriffe ausgehend von Knoten der Struktur, nicht möglich, da jeder Knoten seinen eigenen Schlüssel zum Datenschutz aufweist.

Optional kann das Verfahren zur Schlüsselverteilung auch hierarchisch organisiert werden. In diesem Fall ist es insbesondere wichtig, dass der das Verfahren zur Schlüsselverteilung initiierende Knoten einen übergeordneten Knoten hat, mit dem er direkt verbunden ist. Der Initiator handelt mit den zu ihm direkt verbundenen untergeordneten Knoten einen Sicherheitsverbund aus. Optional kann der Initiator auch mit den übergeordneten Knoten die Sicherheitsbedingungen abstimmen, die als Grundlage für das Verfahren zur Schlüsselverfahren mit dem untergeordneten Knoten dienen. Alternativ kann der Initiator auch unabhängig von den anderen Knoten die Sicherheitsbedingungen bestimmen und beim Verfahren zur Schlüsselverteilung (Key Management) berücksichtigen. In diesem Fall ist das Verfahren zur Schlüsselverteilung (Key Management) administrativ von Wurzelknoten auf mehrere untergeordnete Knoten verteilt, so dass der Wurzelknoten entlastet wird, das heißt die Arbeit für das Verfahren zur Schlüsselverteilung auf mehrere Knoten verteilt wird.

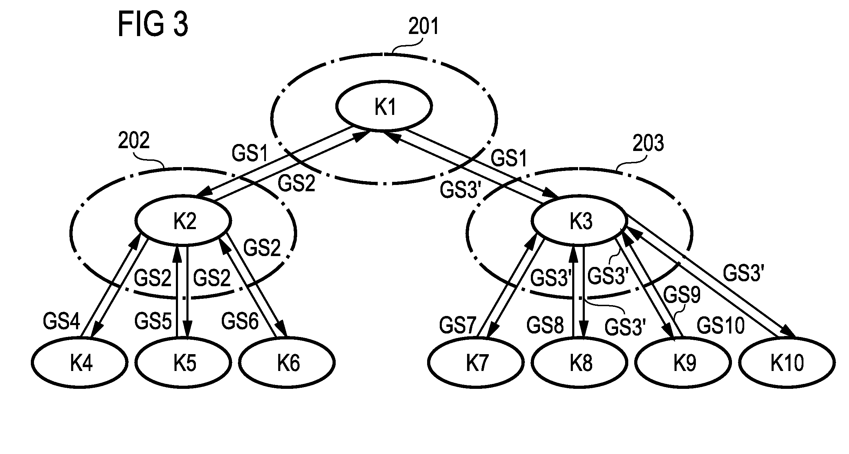

**Fig.3** zeigt in Anlehnung an Fig.2 wiederum die hierarchische Struktur umfassend die Knoten K1 bis K9. Neu hinzu tritt jetzt ein Knoten K10, der unterhalb des Knotens K3 angeordnet wird. Dieses Hinzufügen des Knotens K10 bedingt, dass innerhalb des Sicherheitsverbundes 203 neue Schlüssel verteilt werden müssen, falls sich durch das Hinzufügen des Knotens K10 an den Eigenschaften des Sicherheitsverbundes etwas ändert.

Im vorliegenden Fall von Fig.3 wird für den Sicherheitsverbund 203 um den Knoten K3 ein neuer Schlüssel ausgehandelt, der dann verschlüsselt an die direkt mit dem Knoten K3 verbundenen Knoten übermittelt wird. Dieser neue Schlüssel ist der Gruppenschlüssel GS3' und wird an die Knoten K1, K7, K8, K9 und K10 übermittelt. Die Knoten K2, K4, K5 und K6 bleiben von der Neuaushandlung des Gruppenschlüssels GS3' und somit von der Hinzufügung des Knotens K10 völlig unberührt.

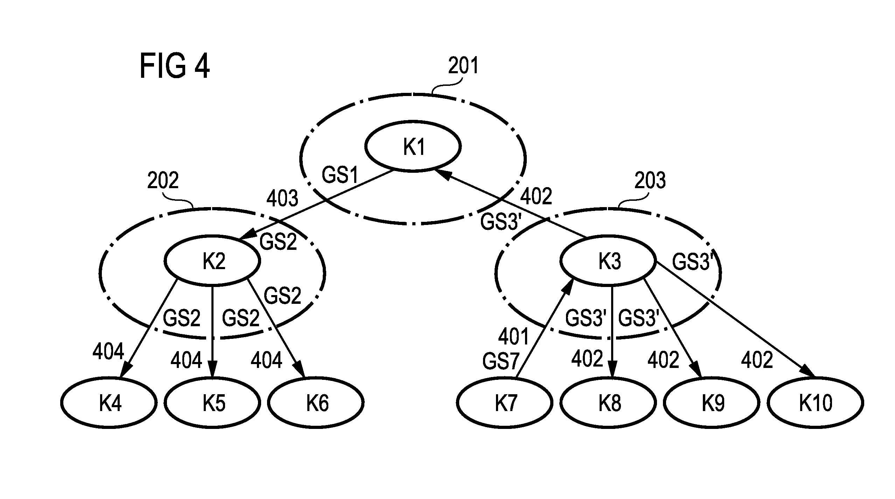

Mit **Fig.4** ist eine hierarchische Struktur gemäß Fig.3 dargestellt, wobei veranschaulicht wird, wie von einem Knoten K7 zu allen anderen Knoten der hierarchischen Struktur eine Nachricht übermittelt wird. Sendet der Knoten K7 an alle anderen Knoten der Baumstruktur Daten, so muss der Knoten K3 nach dem Entschlüsseln die Daten einmal neu verschlüsseln und kann sie dann an die Knoten K8, K9, K10 und K1 übermitteln. Der Knoten K1 muss die Daten einmal umschlüsseln und übermittelt sie dann an den Knoten K2, der wiederum die Daten einmal umschlüsselt und auf einmal an die Knoten K4 bis K6 weiterverteilt. Die unterschiedlichen Datenströme sind in Fig.4 mit den Bezugszeichen 401 bis 404 versehen. Der Datenstrom 401 wird von dem Knoten K3 umgeschlüsselt in den Datenstrom 402. Dieser wird von dem Knoten K1 in den Datenstrom 403 und dort in den Knoten K2 in den Datenstrom 404 umgeschlüsselt. Der Vorteil besteht insbesondere darin, dass im Rahmen des Multicast-Datentransfers auf einmal ausgehend von dem Knoten K3 die Knoten K8, K9, K10 und K1 adressiert werden können und insbesondere mit dem gleichen Datenstrom 402 versorgt werden können. Analog gilt die Übermittlung des gleichen Datenstroms 404 an die Knoten K4 bis K6.

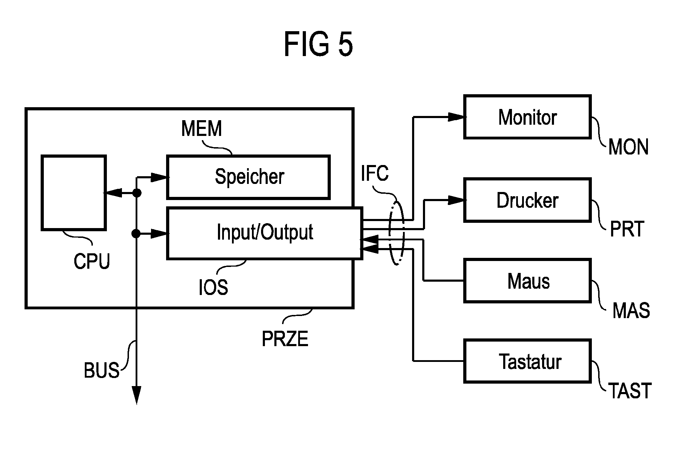

In **Fig.5** ist eine Prozessoreinheit PRZE dargestellt. Die Prozessoreinheit PRZE umfaßt einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Im Rahmen dieses Dokuments wurden folgende Veröffentlichungen zitiert:
[1] Christoph Ruland: Informationssicherheit in Datennetzen, DATACOM-Verlag, Bergheim, 1993, Seiten 155ff.

## Patentansprüche

1. Verfahren zur Datenkommunikation in einem kryptographischen System mit mehreren Instanzen,
a) bei dem die Instanzen in einer hierarchischen Struktur angeordnet sind;
b) bei dem bei einer Veränderung einer aktuellen Instanz der Struktur denjenigen Instanzen, die direkt mit der hierarchisch übergeordneten Instanz der aktuellen Instanz verbunden sind, die Veränderung mitgeteilt wird.

2. Verfahren nach Anspruch 1,
bei dem die Datenkommunikation eine Schlüsselverteilung umfasst.

3. Verfahren nach einem der vorhergehenden Ansprüche,
bei dem die mehreren Instanzen Knoten oder Teilnehmer der Datenkommunikation darstellen.

4. Verfahren nach einem der vorhergehenden Ansprüche,
bei dem die mehreren Instanzen in einem Netzverbund zusammengeschlossen sind.

5. Verfahren nach einem der vorhergehenden Ansprüche,
bei dem die hierarchische Struktur eine Baumstruktur ist.

6. Verfahren nach einem der vorhergehenden Ansprüche,
bei dem die Veränderung der aktuellen Instanz eine der folgenden Möglichkeiten umfasst:
a) ein Hinzufügen der aktuellen Instanz;
b) ein Entfernen der aktuellen Instanz;
c) ein Verändern mindestens einer Eigenschaft der aktuellen Instanz.

7. Verfahren nach einem der vorhergehenden Ansprüche,
bei dem die Mitteilung der Veränderung darin besteht, dass ein modifizierter kryptographischer Schlüssel übermittelt wird.

8. Verfahren nach einem der vorhergehenden Ansprüche zur Durchführung von Multicast-Diensten.

9. Anordnung zur Datenkommunikation in einem kryptographischen System mit mehreren Instanzen,
bei der eine Prozessoreinheit vorgesehen ist, die derart eingerichtet ist, dass
a)die Instanzen in einer hierarchischen Struktur angeordnet sind;
b)bei einer Veränderung einer aktuellen Instanz der Struktur denjenigen Instanzen, die direkt mit der hierarchisch übergeordneten Instanz der aktuellen Instanz verbunden sind, die Veränderung mitteilbar ist.
